# EUROPÄISCHE PATENTSCHRIFT

(11) **EP 1 323 633 B1**
(45) Veröffentlichungstag und Bekanntmachung des Hinweises auf die Patenterteilung: **22.03.2006**
(21) Anmeldenummer: 02022294.9
(22) Anmeldetag: 07.10.2002
(51) Int. Cl.: B64D 33/02

(54) **Lufteinlasssystem eines PTL-Antriebs**
Air intake for turbo-prop engines
Entrée d'air pour moteur turbopropulseur

(30) Priorität: 18.12.2001 DE 10162238
(43) Veröffentlichungstag der Anmeldung: 02.07.2003
(73) Patentinhaber: Rolls-Royce Deutschland Ltd & Co KG, 15827 Dahlewitz (DE)
(72) Erfinder: Negulescu, Dimitrie, 14163 Berlin (DE); Mundt, Christian, 15732 Eichwalde (DE)
(74) Vertreter: Weber, Joachim

(56) Entgegenhaltungen:
- EP-A- 0 997 376
- US-A- 4 250 703
- US-A- 5 725 180

## Beschreibung

Die Erfindung bezieht sich auf ein Lufteinlasssystem eines PTL-Antriebs mit Reihenanordnung eines Propellergetriebes.

Aus dem Stand der Technik sind unterschiedlichste Ausgestaltungsformen von Propeller-Turbinen-Luftstrahltriebwerk(PTL)-Antrieben bekannt. Diese Antriebe umfassen eine Gasturbine sowie ein dieser vorgeschaltetes Propellergetriebe, durch welches ein Propeller angetrieben wird.

Ein Nachteil der bekannten Ausgestaltungen liegt darin, dass sich, bedingt durch das große Propellergetriebe und die massive PTL-typische Triebwerksaufhängung eine sehr große Triebwerksgondel ergibt. Die Größe der Triebwerksgondel wird auch durch die einen entsprechenden Raum benötigenden Wärmetauscher beeinflusst. Insgesamt führt somit die aerodynamische Verkleidung des Turbopropantriebes zu der verhältnismäßig überdimensionierten Gondel.

Aus der Größe der Gondel ergibt sich, dass diese auch eine entsprechend große Stirnfläche aufweist, welche wiederum zu großen aerodynamischen Gondelwiderständen führt. Hierbei ist auch zu berücksichtigen, dass PLT-Antriebe einen geringen Luftdurchsatz erfordern, so dass sich für die Gondel eine niedrige Luftdurchlässigkeit ergibt.

Eine weitere Folge der bekannten Ausgestaltungen ist, dass die benötigten Luft-Einlasskanäle relativ kompliziert hinsichtlich ihrer räumlichen Gestaltung sind. Dies resultiert in einem im Einlass des Verdichters auftretenden ungleichmäßigen Strömungsfeld, welches wiederum die Hauptursache eines instabilen Verdichterverhaltens sein kann.

Hinsichtlich des aerodynamischen Widerstands der Gondeln muss berücksichtigt werden, dass diese bei einem mit PTL-Antrieben versehenen Flugzeug mehr als 15% des gesamten Flugzeugwiderstandes betragen kann.

Die den nächstkommenden Stand der Technik ibildende US-A-4 250 703 beschreibt ein Lufteinlasssystem eines PTL-Antriebs mit Reihenanordnung eines Propellergetriebes sowie mit einer im Wesentlichen unter einer Gondelverkleidung des PTL-Antriebs angeordneten Einlasseinheit, der ein Diffusor zugeordnet ist, wobei eine dem Diffusor nachgeordnete Beruhigungskammer vorgesehen ist, welche mit einem Verdichtereinlass des PTL-Antriebs verbunden ist.

Der Erfindung liegt die Aufgabe zugrunde, ein Lufteinlasssystem eines PTL-Antriebes mit Reihenanordnung eines Propellergetriebes zu schaffen, welches bei einfachem Aufbau und einfacher Ausgestaltung zu einer Reduzierung des aerodynamischen Gondelwiderstands führt und zugleich stabile Verdichterverhältnisse der Gasturbine sichert.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass eine oder mehrere im Wesentlichen unter einer Gondelverkleidung des PTL-Antriebs angeordnete Einlasseinheiten vorgesehen sind, wobei jeder Einlasseinheit ein Diffusor zugeordnet ist, durch welchen die zugeführte Luftströmung in eine rotationssymmetrische Beruhigungskammer geleitet wird, welche mit einem Verdichtereinlass des PTL-Antriebs verbunden ist, wobei die Einlassenheit in Form eines NACA-Senkeinlaufes ausgebildet ist.

Das erfindungsgemäße Lufteinlasssystem zeichnet sich durch eine Reihe erheblicher Vorteile aus.

Die erfindungsgemäß vorgesehenen Einlasseinheiten, welche in Form sogenannter NACA-Lufteinlässe ausgebildet sind, sind im Wesentlichen unter der Gondelverkleidung angeordnet. Hierdurch ist es möglich, die äußere Konfiguration der Gondel zu optimieren und deren Strömungswiderstand zu reduzieren.

Bedingt durch die Reihenanordnung des PTL-Antriebs und des Propellergetriebes ergeben sich sehr günstige räumliche Verhältnisse, die zu einem reduzierten Gesamtdurchmesser der Gondelverkleidung führen.

Die Anzahl der Einlasseinheiten kann erfindungsgemäß den Anforderungen angepasst werden, so können beispielsweise zwischen eine und fünf derartiger Einlasseinheiten an einer Gondelverkleidung vorgesehen sein.

In einer besonders bevorzugten Ausgestaltung der Erfindung ist vorgesehen, dass die jeweilige Einlasseinheit mit einer Vorrichtung zur Umlenkung und Abweisung der Propellernabengrenzschicht versehen ist. Die Integrierung einer derartigen Vorrichtung zur Umlenkung und Abweisung der Propellernabengrenzschicht in die Gondeloberfläche führt zu einem verbesserten Einströmverhalten in die Einlasseinheit.

Eine weitere, besonders vorteilhafte Ausgestaltung der Erfindung sieht vor, dass die Einlasseinheiten zur gondelbezogenen Geschwindigkeitsrichtung der Propellerströmung ausgerichtet sind. Hierdurch kann das Anström- oder Umströmungsverhalten der Gondel entsprechend berücksichtigt werden, um eine optimale Luftströmung in die Einlasseinheiten sicherzustellen.

Zur Verminderung der Verluste ist es besonders vorteilhaft, wenn jede Einlasseinheit stromabwärts ihres Eintrittsquerschnitts mit einem Diffusor (Krümmerdiffusor) versehen ist. Hierdurch wird der Lufteinlass in die nachfolgende Beruhigungskammer durch einen Stoßdiffusor verbessert. Die Beruhigungskammer sorgt für ein gleichförmiges Strömungsfeld im Verdichtereinlass der Gasturbine. Hieraus resultiert ein stabiles Verdichterverhalten in allen Flugzuständen und PTL-Lastzuständen.

Besonders vorteilhaft ist es, wenn im Bereich des Diffusors (Krümmerdiffusor) eine Abzweigung zu einem Teilchenträgheitsseparator ausgebildet ist, die mit einer Ein- und Ausschaltmöglichkeit versehen ist.

Alle Einlasseinheiten des PTL-Antriebs sind bevorzugterweise durch eine flexible Dichtung mit der rotationssymmetrisch ausgebildeten Beruhigungskammer verbunden. Hierdurch wird am Austritt des Krümmerdiffusors bzw. beim Eintritt der Beruhigungskammer jeweils ein Stoßdiffusor ausgebildet.

Durch die beschriebene Konstruktion, insbesondere durch den Stoßdiffusor, erfolgt eine Trennung der Einlasseinheiten von dem Triebwerkverdichtereinlass. Obwohl die Konstruktion insgesamt zu einem erhöhten Druckverlust im PTL-Einlass führt, wird insgesamt eine erhebliche Reduzierung der Gondelstirnfläche des PTL-Antriebs durch die gewählte Einlasskonfiguration erzielt. Dies wiederum führt zu einer signifikanten Reduzierung des Kraftstoffverbrauchs, bedingt durch den verbesserten aerodynamischen Gondelwiderstand. Insgesamt führt somit die reduzierte Gondelstirnfläche zusammen mit reduzierten Interferenzverlusten zu einer Reduzierung des Kraftstoffverbrauchs, wodurch sich die Triebwerk-Umweltfreundlichkeit sowie die Flugreichweite erhöht.

Ein weiterer Vorteil der Erfindung liegt darin, dass sich eine Gewichtsreduzierung der Triebwerksgondeln ergibt, da deren Verkleidung kleiner ausgestaltet werden kann.

Der wesentliche Vorteil des stabilen Verdichterverhaltens in allen PTL-Zuständen und allen Flugzuständen wurde bereits angesprochen.

Durch die Trennung des Gondeleinlasses (Einlasseinheiten) von dem Triebwerk-Verdichtereinlass ergibt sich weiterhin eine Vereinfachung der Triebwerksinstallation.

Hinzu kommt, dass es möglich ist, an der Beruhigungskammer sekundäre Einlässe für weitere Aggregate oder Ähnliches vorzusehen, beispielsweise für Ölkühler, für die Kabinenluftkühlung und/oder die Gondellüftung. Es ist dabei auch möglich, die gesamte Anzahl der sekundären Einlässe zu reduzieren.

Im Folgenden wird die Erfindung anhand eines Ausführungsbeispiels, dargestellt in den Zeichnungen Fig. 1, Fig. 2 und Fig. 3, beschrieben. Dabei zeigt:
- Fig. 1: eine vereinfachte perspektivische Ansicht eines PTL-Triebwerks mit einer Gondel an einem Flügel eines Flugzeuges,
- Fig. 2: eine perspektivische Teil-Ansicht der Lufteinlasskonfiguration mit mehreren erfindungsgemässen Einlasseinheiten, die gleichmäßig am Umfang einer rotationssymmetrischen Beruhigungskammer verteilt sind, sowie mit Reihenanordnung des Propellergetriebes und des Triebwerks, und
- Fig. 3: eine vereinfachte Teil-Schnittansicht der erfindungsgemäßen Einlasseinheit mit Stoßdiffusor und Beruhigungskammer.

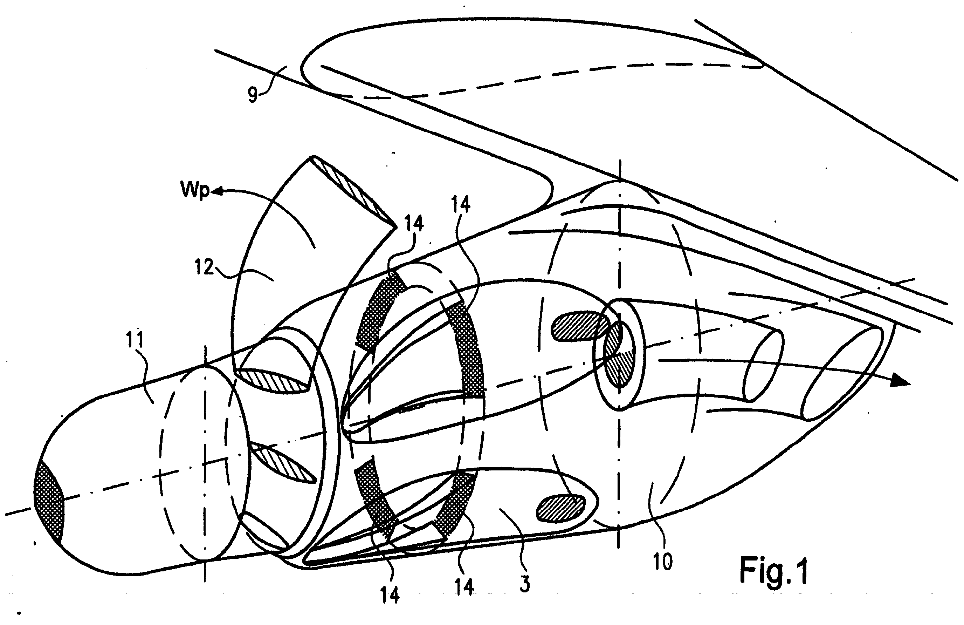

Die Fig. 1 zeigt zunächst in vereinfachter Darstellung einen Teil eines Flügels 9 eines Flugzeugs, an welchem eine Gondel 10 eines PTL-Antriebs montiert ist. Am stirnseitig vorderen Bereich ist eine Propellernabe 11 gezeigt. Weiterhin zeigt die Fig. 1 in schematischer Darstellung einen Teil eines Propellerblatts 12.

Aus der Fig. 1 ist weiterhin ersichtlich, dass am Umfang der Gondel 10 insgesamt vier Einlasseinheiten 3 angeordnet sind, welche teilweise in die Verkleidung der Gondel 10 integriert sind.

Auf die Darstellung des Getriebes, der Gasturbine sowie weiterer Aggregate wurde zum Zwecke der Verdeutlichung der Fig. 1 verzichtet.

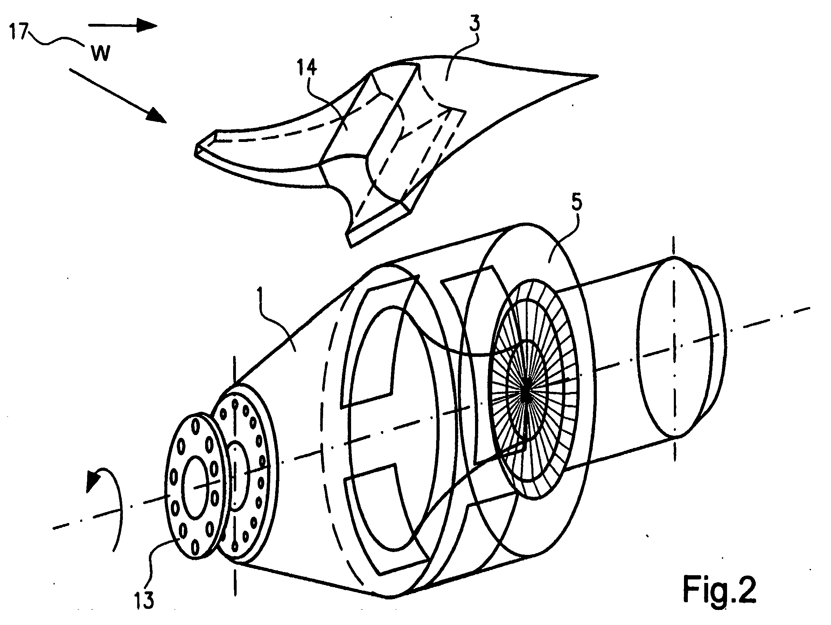

Die Fig. 2 zeigt in einer vergrößerten perspektivischen Darstellung einen Propellerflansch 13, welchem in Reihenanordnung ein Propellergetriebe 1 nachgeordnet ist. Die erfindungsgemäße Einlasseinheit 3 ist ähnlich einer Explosionsansicht getrennt gezeigt, mit dem Bezugszeichen 14 sind jeweils die korrespondierenden Einströmöffnungen angegeben.

Weiterhin zeigt die Fig. 2 in schematischer Weise eine ringförmige Beruhigungskammer 5, durch welche die Luftströmung einem Verdichter-Eintrittsleitrad 16 eines Verdichters 15 zugeführt wird.

Mit dem Bezugszeichen 17 ist ein gondelbezogener Geschwindigkeitsvektor der Propellerabströmung dargestellt.

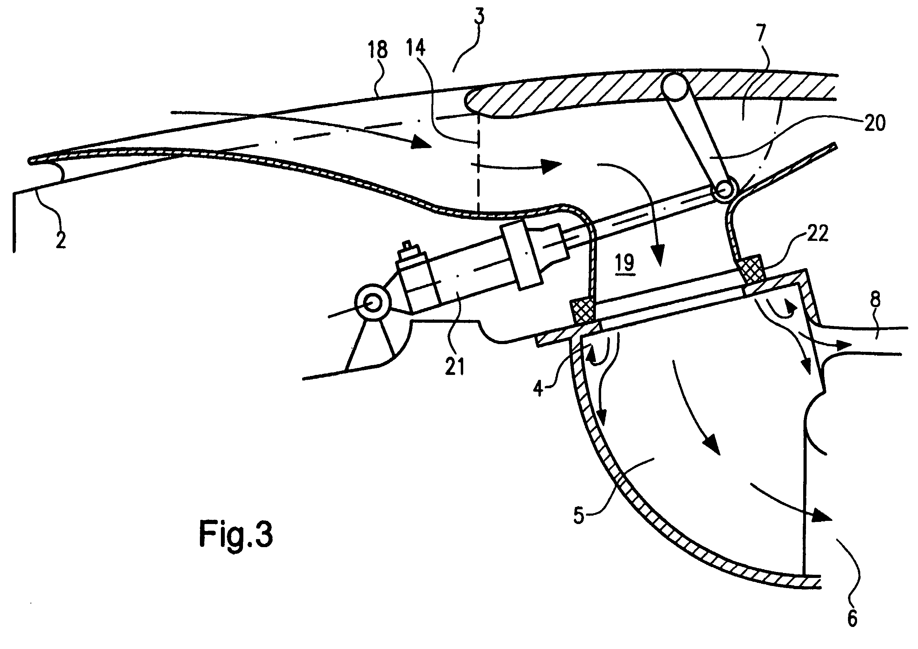

Aus der Fig. 3 ergibt sich eine detaillierte Ansicht der Ausgestaltung der erfindungsgemäßen Einlasseinheit 3. Das Bezugszeichen 2 zeigt einen Teil einer Gondelverkleidung bzw. der Oberfläche der Gondel. Mit dem Bezugszeichen 18 ist eine NACA-Vorderkante mit integrierter Vorrichtung zur Umlenkung und Abweisung der Propellernabengrenzschicht bezeichnet.

Die Fig. 3 stellt den Einlauf der Luftströmung dar. Diese wird in einem Krümmer 19 mit Diffusor radial nach innen umgelenkt. In diesem Umlenkbereich ist eine Abzweigung 7 zu einem Teilchenträgheitsseparator gezeigt, im Bereich deren eine Klappe 20 mit einem Antrieb 21 vorgesehen ist.

Die Einlasseinheit 3 ist über ein flexibles Dichtungselement 22 mit der Beruhigungskammer 5 verbunden. Hierbei wird ein Stoßdiffusor 4 zur Beruhigungskammer gebildet. An der Beruhigungskammer 5 ist ein Verdichtereinlass 6 gezeigt, sowie ein Sekundärauslass 8 zur Zuführung von Sekundärluft.

Die Erfindung ist nicht auf das gezeigte Ausführungsbeispel beschränkt, vielmehr ergeben sich im Rahmen der Ansprüche vielfältige Abwandlungs- und Modifikationsmöglichkeiten.

### Bezugszeichenliste

- 1: Propellergetriebe
- 2: Gondelverkleidung
- 3: Einlasseinheit
- 4: Stoßdiffusor
- 5: Beruhigungskammer
- 6: Verdichtereinlass
- 7: Abzweigung
- 8: Sekundärauslass
- 9: Flügel
- 10: Gondel
- 11: Propellernabe
- 12: Propellerblatt
- 13: Propellerflansch
- 14: Einströmöffnung
- 15: Verdichter
- 16: Verdichtereintrittsleitrad
- 17: Vektor
- 18: NACA-Vorderkante
- 19: Krümmer mit Diffusor
- 20: Klappe
- 21: Antrieb
- 22: Dichtungselement

## Patentansprüche

1. Lufteinlasssystem für einen PTL-Antrieb mit Reihenanordnung eines Propellergetriebes (1), mit einer Gandelverkleidung für den PTL-Antrieb und mit einer oder mehreren im Wesentlichen unter der Gondelverkleidung (2) angeordneten Einlasseinheiten (3), wobei jeder Einlasseinheit (3) ein Diffusor (4) zugeordnet ist, und mit einer rotationssymmetrischen Beruhigungskammer (5), in welche der jeweilige Diffusor (4) mündet und welche mit einem Verdichtereinlass (6.) für den PTL-Antrieb verbunden ist, **dadurch gekennzeichnet, dass** die Einlasseinheit in Form eines NACA-Senkeinlaufes ausgebildet ist.

2. Lufteinlasssystem nach Anspruch 1, **dadurch gekennzeichnet, dass** die Einlasseinheit (3) mit einer Vorrichtung zur Umlenkung und Abzweigung der Propellernabengrenzschicht ner sehen ist.

3. Lufteinlasssystem nach Anspruch 1 oder 2, **dadurch gekennzeichnet, dass** die Einlaufachse parallel zur Richtung der gondelbezogenen Relativgeschwindigkeit der Propellerströmung ausgerichtet ist.

4. Lufteinlasssystem nach einem der Ansprüche 1 bis 3, **dadurch gekennzeichnet, dass** der Diffusor als Krümmerdiffusor (19) ausgebildet ist.

5. Lufteinlasssystem nach einem der Ansprüche 1 bis 3, **dadurch gekennzeichnet, dass** der Diffusor als Stoßdiffusor (4) ausgebildet ist.

6. Lufteinlasssystem nach einem der Ansprüche 1 bis 5, **dadurch gekennzeichnet, dass** die Einlasseinheit (3) mit einer Abzweigung (7) zu einem Teilchenträgheitsseparator versehen ist.

7. Lufteinlasssystem nach einem der Ansprüche 1 bis 6, **dadurch gekennzeichnet, dass** die Beruhigungskammer (5) zumindest einen Sekundärauslass (8) aufweist.

## Claims

1. Air intake system for a turboprop engine with a propeller gearbox (1) in in-line arrangement, with a nacelle fairing for the turboprop engine and with one or more intake units (3) arranged essentially below the nacelle fairing (2), with a diffusor (4) being related to each intake unit (3), and with a rotationally symmetric attenuation chamber (5) into which the respective diffusor (4) issues and which is connected to a compressor inlet (6) for the turboprop engine, **characterized in that** the intake unit is designed as a recessed NACA air intake.

2. Air intake system in accordance with Claim 1, **characterized in that** the intake unit (3) is provided with a device for the deflection and diversion of the propeller hub boundary layer.

3. Air intake system in accordance with Claim 1 or 2, **characterized in that** the intake axis is parallel to the nacelle-related relative speed vector of the propeller flow.

4. Air intake system in accordance with one of the Claims 1 to 3, **characterized in that** the diffusor is designed as an elbow-type diffusor (19).

5. Air intake system in accordance with one of the Claims 1 to 3, **characterized in that** the diffusor is designed as a shock diffusor (4).

6. Air intake system in accordance with one of the Claims 1 to 5, **characterized in that** the intake unit (3) has a branch (7) to an inertia-type particle separator.

7. Air intake system in accordance with one of the Claims 1 to 6, **characterized in that** the attenuation chamber (5) is provided with at least one secondary outlet (8).

## Revendications

1. Système d'entrée d'air pour un moteur turbopropulseur avec disposition en rangée d'un engrenage d'hélice (1), avec un habillage de la nacelle pour le moteur turbopropulseur et avec une ou plusieurs unités d'admission (3) disposées pour l'essentiel sous l'habillage de la nacelle (2), sachant qu'un diffuseur (4) est associé à chaque unité d'admission (3), et avec une chambre de stabilisation (5) à symétrie de révolution dans laquelle débouche chaque diffuseur (4) et qui est reliée à une entrée de compresseur (6) pour le moteur turbopropulseur, **caractérisé en ce que** l'unité d'admission a la forme d'une entrée d'air noyée NACA.

2. Système d'entrée d'air selon la revendication 1, **caractérisé en ce que** l'unité d'admission (3) est munie d'un dispositif destiné à dévier et dériver la couche limite du moyeu d'hélice.

3. Système d'entrée d'air selon la revendication 1 ou 2, **caractérisé en ce que** l'axe d'entrée est orienté parallèlement à la direction du vecteur de vitesse relative du flux d'hélice par rapport à la nacelle.

4. Système d'entrée d'air selon une des revendications 1 à 3, **caractérisé en ce que** le diffuseur prend la forme d'un diffuseur coudé (19).

5. Système d'entrée d'air selon une des revendications 1 à 3, **caractérisé en ce que** le diffuseur prend la forme d'un diffuseur à impact (4).

6. Système d'entrée d'air selon une des revendications 1 à 5, **caractérisé en ce que** l'unité d'admission (3) est munie d'une dérivation (7) vers un séparateur inertiel de particules.

7. Système d'entrée d'air selon une des revendications 1 à 6, **caractérisé en ce que** la chambre de stabilisation (5) est munie d'au moins une sortie secondaire (8).
